# EUROPEAN PATENT APPLICATION

(11) **EP 4 800 968 A1**
(43) Date of publication of application: **02.09.2026**
(21) Application number: 25160941.8
(22) Date of filing: 28.02.2025
(51) Int. Cl.: H04L 9/08, H04L 9/14

(54) **ESTABLISHING A PLURALITY OF SECRET CRYPTOGRAPHIC KEYS SHARED BETWEEN A SENDING UNIT AND A PLURALITY OF RECEIVING UNITS**

(71) Applicant: Terra Quantum AG, 9000 St. Gallen (CH)
(72) Inventor: Kirsanov, Nikita, 9000 St. Gallen (CH); Ashurov, Abdufattokh, 9000 St. Gallen (CH); Zemlianov, Vladislav, 9000 St. Gallen (CH); Vinokur, Valerii, 9000 St. Gallen (CH)
(74) Representative: Lucke, Andreas

(57) **Abstract**

The disclosure relates to a method for establishing a plurality of secret cryptographic keys shared between a sending unit and a plurality of receiving units, wherein the sending unit is connected to the plurality of receiving units by a plurality of communication channels. The method comprises transmitting, at the sending unit, at least one first electromagnetic test pulse to a first receiving unit among the plurality of receiving units via a first communication channel among the plurality of communication channels, and determining a first signal loss in the first communication channel based on the at least one first electromagnetic test pulse detected at the first receiving unit. The method further comprises transmitting, at the sending unit, a first sequence of electromagnetic signal pulses to the first receiving unit via the first communication channel for establishing a first cryptographic key shared between the sending unit and the first receiving unit, wherein each electromagnetic signal pulse of the first sequence of electromagnetic signal pulses corresponds to a bit of a random bit sequence according to a key distribution protocol. The method further comprises transmitting, at the sending unit, at least one second electromagnetic test pulse to a second receiving unit among the plurality of receiving units via a second communication channel among the plurality of communication channels, and determining a second signal loss in the second communication channel based on the at least one second electromagnetic test pulse detected at the second receiving unit. The method further comprises determining a first key bandwidth share for the first sequence of electromagnetic signal pulses, wherein both the determined first signal loss and the determined second signal loss are taken into account for determining the first key bandwidth share.

## Description

### Technical Field

The disclosure relates to the field of quantum key distribution in a multi-user scenario.

### Background

Quantum key distribution (QKD) employs quantum resources for achieving provably secure communication between a sending unit (conventionally called Alice) and a receiving unit (conventionally called Bob). While the basic concepts of QKD date all the way back to the 1980s and 1990s, many of the existing protocols suffer from low key exchange rates and from distance constraints, in particular due to detrimental effects of intrinsic losses and decoherence at the sending unit, at the receiving unit or along the communication channel, as well as from vulnerabilities to eavesdropping by a malicious third party (conventionally called Eve).

Recently, sophisticated techniques have been developed for establishing quantum key distribution at high key distribution rates and over very long distances under reasonable assumptions on the line control that Eve may achieve, as described in EP 4 047 860 A1.

In many scenarios, it is desirable to establish secure communication in a multi-node topology, in which there is more than one sending unit and/or more than one receiving unit. US 7,430,295 B1 describes QKD techniques for establishing cryptographically secure connections between pairs of users in a multi-node network, using optical switches operated in a round-robin regime. US 8,885,828 B2 discloses a key management system built on pre-shared key distribution between all the users of a specific network subgroup in a switched optical star network.

A. Tayduganov et al., "Optimizing the deployment of quantum key distribution switch-based networks", Optics Express 29 (16) 24884, July 2021, describes the use of optical switches for distributing quantum cryptographic keys in a network consisting of eight nodes.

X. Tang et al., "Demonstration of an Active Quantum Key Distribution Network"; Quantum Communications and Quantum Imaging IV, vol. 6305, Proceedings SPIE 2006, pp. 29-34, describes a three-node QKD network that employs optical switches to establish one-to-any and any-to-any communication, comprising time alignment procedures.

In view of the prior art, what is needed is a scheme for establishing quantum key distribution at high key distribution rates and over long distances in a multi-user topology.

### Overview

This objective is achieved with a method according to independent claim 1 and a communication system according to independent claim 15. The dependent claims relate to optional embodiments.

According to a first aspect, the disclosure relates to a method for establishing a plurality of secret cryptographic keys shared between a sending unit and a plurality of receiving units, wherein the sending unit is connected to the plurality of receiving units by a plurality of communication channels. The method comprises transmitting, at the sending unit, at least one first electromagnetic test pulse to a first receiving unit among the plurality of receiving units via a first communication channel among the plurality of communication channels, and determining a first signal loss in the first communication channel based on the at least one first electromagnetic test pulse detected at the first receiving unit. The method further comprises transmitting, at the sending unit, a first sequence of electromagnetic signal pulses to the first receiving unit via the first communication channel for establishing a first cryptographic key shared between the sending unit and the first receiving unit, wherein each electromagnetic signal pulse of the first sequence of electromagnetic signal pulses corresponds to a bit of a random bit sequence according to a key distribution protocol. The method further comprises transmitting, at the sending unit, at least one second electromagnetic test pulse to a second receiving unit among the plurality of receiving units via a second communication channel among the plurality of communication channels, and determining a second signal loss in the second communication channel based on the at least one second electromagnetic test pulse detected at the second receiving unit. The method further comprises determining a first key bandwidth share for the first sequence of electromagnetic signal pulses, wherein both the determined first signal loss and the determined second signal loss are taken into account for determining the first key bandwidth share.

The first signal loss in the first communication channel and/or the second signal loss in the second communication channel may be attributed to an eavesdropper (conventionally called Eve). By transmitting electromagnetic test pulses to the first receiving unit and to the second receiving unit and determining the respective first and second signal losses, the quantum key distribution scheme according to the present disclosure may establish a line control of the first communication channel and the second communication channel, which permits it to achieve high key rates over long transmission distances under realistic assumptions on the properties of the physical transmission channels. Given that both the determined first signal loss and the determined second signal loss are taken into account for determining the first key bandwidth share, the scheme according to the present disclosure may maintain line control across the entire communication network, i.e., between the sending unit and all the receiving units in the communication network at all times.

As a consequence, an eavesdropper may be effectively prevented from manipulating any of the communication channels in the network, or at least any such manipulations may not go unnoticed, and the eavesdropper's manipulations may be monitored even when that particular communication channel is not actively being used for quantum key distribution at that time. Hence, the security of the quantum key distribution in the multi-user topology can be effectively enhanced, while at the same time the techniques for line control based on the determined first signal loss and second signal loss may still allow to achieve high quantum key distribution rates over long communication distances.

According to an embodiment, the method further comprises transmitting, at the sending unit, a second sequence of electromagnetic signal pulses to the second receiving unit via the second communication channel for establishing a second shared cryptographic key between the sending unit and the second receiving unit, wherein each electromagnetic signal pulse of the second sequence of electromagnetic signal pulses corresponds to a bit of a second random bit sequence according to the key distribution protocol.

In particular, the second sequence of electromagnetic signal pulses may be transmitted to the second receiving unit after the step of transmitting the at least one second electromagnetic test pulse to the second receiving unit, and/or after determining the second signal loss in the second communication channel based on the at least one second electromagnetic test pulse.

In the context of the present disclosure, a (first or second) electromagnetic test pulse may be any electromagnetic pulse that allows the monitoring of signal losses in the respective (first or second) communication channel.

According to an embodiment, the at least one first electromagnetic test pulse may comprise a sequence of first electromagnetic test pulses.

Similarly, the at least one second electromagnetic test pulse may comprise a sequence of second electromagnetic test pulses.

According to an embodiment, the at least one (first or second) electromagnetic test pulse and/or each pulse of the sequence of (first and second) electromagnetic test pulses may comprise photon pulses and/or coherent light pulses.

According to an embodiment, the at least one (first or second) electromagnetic test pulse and/or each pulse of the sequence of (first and second) electromagnetic test pulses may be randomized with respect to its pulse intensity, pulse phase, pulse length and/or pulse shape.

In the context of the present disclosure, an electromagnetic signal pulse may correspond to any electromagnetic pulse that allows the sending unit and the respective receiving unit to establish a secret cryptographic key, possibly by means of postprocessing techniques.

According to an embodiment, an electromagnetic signal pulse may may comprise a photon pulse and/or a coherent light pulse.

In general, the electromagnetic test pulses and/or the electromagnetic signal pulses may correspond to those described in the context of EP 4047860 A1.

According to an embodiment, a pulse intensity or an average number of photons of the at least one first electromagnetic test pulse may be larger than a pulse intensity or average number of photons of every electromagnetic signal pulse in the first sequence of electromagnetic signal pulses.

Similarly, a pulse intensity or an average number of photons of the at least one second electromagnetic test pulse may be larger than a pulse intensity or average number photons of every electromagnetic signal pulse in the second sequence of electromagnetic signal pulses.

Optionally, a pulse duration of the at least one first electromagnetic test pulse is larger than a pulse duration of an electromagnetic pulse of the first sequence of electromagnetic signal pulses.

Similarly, a pulse duration of the at least one second electromagnetic test pulse is larger than a pulse oration of an electromagnetic pulse of the second sequence of electromagnetic signal pulses.

According to an embodiment, at least part of the electromagnetic signal pulses shared between the sending unit and the respective receiving unit may be employed for authenticating the respective communication channel.

In an embodiment, the method further comprises authenticating the first communication channel, in particular by means of error correction and/or information reconciliation and/or privacy amplification, and/or in particular employing at least part of the first sequence of electromagnetic signal pulses.

Similarly, the method may further comprise authenticating the second communication channel, in particular by means of error correction and/or information reconciliation and/or privacy amplification, and/or in particular employing at least part of the second sequence of electromagnetic signal pulses.

According to an embodiment, both the determined first signal loss and the determined second signal loss may be taken into account for determining the first key bandwidth share even when, in a given communication round among a plurality of communication rounds according to the key distribution protocol, no second cryptographic key shared between the sending unit and the second receiving unit is established, or even when, in a given communication round among a plurality of communication rounds according to the key distribution protocol, a second cryptographic key is shared between the sending unit and the second receiving unit only for authenticating the second communication channel.

The method may further comprise determining a second key bandwidth share for the second sequence of electromagnetic signal pulses, wherein both the determined first signal loss and the determined second signal loss may be taken into account for determining both the first key bandwidth share and the second key bandwidth share.

Hence, both the first communication channel and the second communication channel may be continuously line-controlled during operation of the quantum key distribution protocol, possibly over a plurality of communication rounds, thereby guaranteeing a secure and effective key exchange between the sending unit and the plurality of receiving units.

In the context of the present disclosure, the first key bandwidth share may correspond to a fraction of a total number of electromagnetic signal pulses sent by the sending unit, in particular in a given communication round among a plurality of communication rounds, from the sending unit to the first receiving unit. In other words, the first key bandwidth share may correspond to a relative share of electromagnetic signal pulses sent to the first receiving unit, among the plurality of receiving units.

Similarly, the second key bandwidth share may correspond to a fraction of a total number of electromagnetic signal pulses sent by the sending unit, in particular in a given communication round among a plurality of communication rounds, from the sending unit to the second receiving unit. Hence, the second key bandwidth share may correspond to a relative share of electromagnetic signal pulses sent to the second receiving unit, among the plurality of receiving units.

According to an embodiment, the method may further comprise adjusting and/or optimizing and/or maximizing the first key bandwidth share and/or the second key bandwidth share in accordance with the first signal loss and the second signal loss.

In an embodiment, the method further comprises determining a first key generation rate for the first sequence of electromagnetic signal pulses.

The method may further comprise determining the first key bandwidth share for the first sequence of electromagnetic signal pulses based on the first key generation rate.

Similarly, the method may further comprise determining a second key generation rate for the second sequence of electromagnetic signal pulses.

The method may further comprise determining the second key bandwidth share for the second sequence of electromagnetic signal pulses based on the second key generation rate.

According to an embodiment, the method comprises determining the first key bandwidth share for the first sequence of electromagnetic signal pulses based on the first key generation rate and based on the second key generation rate.

Similarly, the method may comprise determining the second key bandwidth share for the second sequence of electromagnetic signal pulses based on the first key generation rate and based on the second key generation rate.

In the context of the present disclosure, the first key generation rate may amount to a ratio of (i) the amount of secret cryptographic key shared between the sending unit and the first receiving unit, and (ii) the number of electromagnetic signal pulses in the first sequence of electromagnetic signal pulses sent from the sending unit to the first receiving unit.

Similarly, the second key generation rate may amount to a ratio of (i) the amount of secret cryptographic key shared between the sending unit and the second receiving unit, and (ii) the number of electromagnetic signal pulses in the second sequence of electromagnetic signal pulses sent from the sending unit to the second receiving unit.

Hence, the first key generation rate and the second key generation rate may describe the efficiency of key generation between the sending unit and the first receiving unit and second receiving unit, respectively.

According to an embodiment, determining the first key bandwidth share and determining the second key bandwidth share comprises assigning a first bandwidth weight pertaining to the first sequence of electromagnetic signal pulses and assigning a second bandwidth weight pertaining to the second sequence of electromagnetic signal pulses, respectively.

By assigning the first bandwidth weight and the second bandwidth weight, the amount of key shared between the sending unit and the respective first and second receiving units may be adjusted or optimized.

According to an embodiment, the first bandwidth weight is selected as a function of a first key generation rate for the first sequence of electromagnetic signal pulses.

Alternatively or additionally, the second bandwidth weight may be selected as a function of a second key generation rate for the second sequence of electromagnetic signal pulses.

According to an embodiment, the first bandwidth weight is proportional to an inverse of the first key generation rate for the first sequence of electromagnetic signal pulses.

Similarly, the second bandwidth weight may be proportional to an inverse of the second key generation rate for the second sequence of electromagnetic signal pulses.

By choosing the bandwidth weights proportional to the inverse of the respective key generation rates, it may be ensured that receiving units that suffer from a low key generation rate, such as due to a particularly noisy communication channel or enhanced activity by an eavesdropper, receive an increased share of the bandwidth, so to compensate for these detrimental effects.

According to an embodiment, the first bandwidth weight and the second bandwidth weight are assigned to be no larger than a first maximum weight and no larger than a second maximum weight, respectively.

By setting maximum values for the respective bandwidth weights, an excessive use of the quantum key distribution resources by a single receiving unit may be countered.

According to an embodiment, the second maximum weight may be equal to the first maximum weight.

Optionally, the first maximum weight may be selected as a function of a first key generation rate for the first sequence of electromagnetic signal pulses.

Similarly, the second maximum weight may be selected as a function of the second key generation rate for the second sequence of electromagnetic signal pulses.

According to an embodiment, the first maximum weight is proportional to an inverse of the first key generation rate for the first sequence of electromagnetic signal pulses.

Similarly, the second maximum weight may be proportional to an inverse of the second key generation rate for the second sequence of electromagnetic signal pulses.

According to an embodiment, the first maximum weight and/or the second maximum weight are proportional to an average of the inverse of a plurality of key generation rates pertaining to the plurality of receiving units.

According to an embodiment, the first bandwidth weight comprises or may be given in terms of an exponential function of the first key generation rate and/or the second key generation rate.

In an embodiment, the first bandwidth weight comprises or may be given in terms of an exponential function of an average of the inverse of a plurality of key generation rates pertaining to the plurality of receiving units.

Similarly, the second bandwidth weight may comprise or may be given in terms of an exponential function of the first key generation rate and/or the second key generation rate.

In an embodiment, the second bandwidth weight may comprise or may be given in terms of an exponential function of an average of the inverse of a plurality of key generation rates pertaining to the plurality of receiving units.

According to an embodiment, the first bandwidth weight comprises or may be given in terms of a Heaviside step function of the first key generation rate and/or the second key generation rate.

Similarly, the second bandwidth weight may comprise or may be given in terms of a Heaviside step function of the first key generation rate and/or the second key generation rate.

Both the exponential function and the Heaviside step function provide for desirable properties of the weight function, in particular a suitable boundary behavior for both high and low key generation rates.

According to an embodiment, the first key bandwidth share and the second key bandwidth share are determined by means of an optimization.

An optimization functional of the optimization may depend on a user-selected distribution parameter that reflects a degree of uniformity in the amount of secret cryptographic keys shared with the first receiving unit and the second receiving unit, respectively.

According to an embodiment, the distribution parameter is a Gini coefficient, or may comprise a Gini coefficient.

Gini coefficients are widely used in economic theory to describe the distribution of wealth or income, and in particular capture the amount of inequality in the distribution of a given random variable, such as wealth or income.

In the context of the present disclosure, the Gini coefficient may describe an amount of inequality or an amount of uniformity in the distribution of secret cryptographic keys shared with the first receiving unit and the second receiving unit, respectively.

According to an embodiment, the optimization functional is given in terms of at least a first key generation rate for the first sequence of electromagnetic signal pulses and a second key generation rate for the second sequence of electromagnetic signal pulses.

The techniques of the present disclosure have been illustrated above with reference to at least a first receiving unit and a second receiving unit. However, it is a particular advantage that the techniques of the present disclosure may be employed in networks comprising any number of receiving units. In these configurations, the steps described above and further below for the first receiving unit and the second receiving unit may be performed analogously for the n-th receiving unit, for any integer n > 2.

According to an embodiment, the sending unit and the plurality of receiving units may be arranged in a star topology.

However, the techniques of the present disclosure may be employed in a variety of network topologies, which may generally comprise any number of sending units and any number of receiving units.

In the context of the present disclosure, each communication channel among the plurality of communication channels may be adapted to transmit quantum information between the sending unit and the respective receiving unit.

In an embodiment, the (first and second) communication channel may be or may comprise an optical channel, such as a fiber link.

According to an embodiment, each communication channel may also be adapted to additionally transmit classical information between the sending unit and the respective receiving unit.

The classical side channel may be employed to exchange classical information between the sending unit and the plurality of receiving units, as may be required by the key distribution protocol. The classical information may be cryptographically authenticated information.

According to an embodiment, the method may further comprise sharing a cryptographic key between the first receiving unit and the second receiving unit.

Sharing a cryptographic key between the first receiving unit and the second receiving unit may be established by sharing one and the same cryptographic key between the sending unit and the first and second receiving units.

Hence, in an embodiment, the second shared cryptographic key may coincide with the first shared cryptographic key.

According to an embodiment, both the first receiving unit and the second receiving unit may be connected to the sending unit by means of an optical switch unit.

According to an embodiment, the optical switch unit may be cryptographically securely controlled by the sending unit.

According to an embodiment, the optical switch unit may be integrated into the sending unit.

According to an embodiment, the first communication channel and/or the second communication channel may comprise a plurality of spatially separated amplifier units.

Amplifier units may be employed to enhance the distance over which the respective cryptographic keys can be securely shared.

The first signal loss and the second signal loss, respectively, may then also include signal losses or other manipulations that an eavesdropper may effect at the respective amplifier units.

According to an embodiment, the method further comprises receiving, at the sending unit, a first cryptographic key request from the first receiving unit, and/or receiving, at the sending unit, a second cryptographic key request from the second receiving unit.

The first cryptographic key request may comprise information pertaining to a first size and/or a first timing of a first cryptographic key requested by the first receiving unit.

Similarly, the second cryptographic key request may comprise information pertaining to a second size and/or a second timing of a second cryptographic key requested by the second receiving unit.

The sending unit may transmit the first sequence of electromagnetic signal pulses and/or the second sequence of electromagnetic signal pulses in accordance with the first cryptographic key request and the second cryptographic key request, respectively.

The first cryptographic key request and/or the second cryptographic key request may be encoded by means of a cryptographic key common to the sending unit and the plurality of receiving units.

By encoding the first cryptographic key request and/or the second cryptographic key request, the security of the quantum key distribution scheme against attacks by an eavesdropper may be further enhanced.

The cryptographic key common to the sending unit and the plurality of receiving units may be established by means of the key distribution protocol according to the present disclosure. In particular, parts of the first cryptographic key shared between the sending unit and the first receiving unit and of the second cryptographic key shared between the sending unit and the second receiving unit may establish the common cryptographic key that encodes the first cryptographic key request and/or the second cryptographic key request.

According to an embodiment, the first key bandwidth share and the second key bandwidth share may be determined and/or adjusted in accordance with the first cryptographic key request from the first receiving unit and in accordance with the second cryptographic key request from the second receiving unit.

By determining and/or adjusting the first key bandwidth share and the second key bandwidth share in accordance with the amount of key requested from the first receiving unit and the second receiving unit, an excessive key sharing with one of the receiving units may be effectively avoided.

According to an embodiment, the method further comprises determining, at the sending unit, a sequence or an order of transmitting the first sequence of electromagnetic signal pulses to the first receiving unit and of transmitting the second sequence of electromagnetic signal pulses to the second receiving unit, in particular in accordance with the first cryptographic key request and/or the second cryptographic key request.

Determining the sequence or order may comprise ordering key requests received from the plurality of receiving units in terms of increasing transmission time.

According to an embodiment, the method comprises setting the first key bandwidth share to zero in case the first signal loss is determined to be above a pre-defined first loss threshold.

By setting the first key bandwidth share to zero, the key distribution to the first receiving unit can be effectively cut, or at least suspended in case the first communication channel has too high losses. The key can then be re-distributed among the remaining receiving units.

Similarly, the method may comprise setting the second key bandwidth share to zero in case the second signal loss is determined to be above a pre-defined second loss threshold.

While the method steps of the first aspect have been described above in a certain order, in general the steps may be implemented in any time order.

According to an embodiment, the step of transmitting the first sequence of electromagnetic signal pulses may follow the step of transmitting the at least one first electromagnetic test pulse and/or the step of determining the first signal loss.

In an embodiment, the steps of transmitting the second electromagnetic test pulse and/or determining the second signal loss in the second communication channel may refer to a previous communication round that precedes the step of transmitting the first sequence of electromagnetic signal pulses to the first receiving unit.

According to an embodiment, the steps of transmitting the first electromagnetic test pulse and/or determining the first signal loss in the first communication channel may likewise refer to a previous communication round that precedes the step of transmitting the first sequence of electromagnetic signal pulses to the first receiving unit.

According to an embodiment, the method steps described above may be iterated in a plurality of communication rounds according to the key distribution protocol.

In general, a key distribution protocol may comprise any integer number m of communication rounds.

According to an embodiment, in every communication round among the plurality of communication rounds, both the determined first signal loss and the determined second signal loss are taken into account for determining the first key bandwidth share even when, in a given communication round among the plurality of communication rounds, no second cryptographic key shared between the sending unit and the second receiving unit is established; or even when, in a given communication round among the plurality of communication rounds, a second cryptographic key is shared between the sending unit and the second receiving unit only for authenticating the second communication channel.

The first signal loss and/or the second signal loss may be determined in a previous communication round among the plurality of communication rounds.

Employing the techniques of the present disclosure, an effective physical line control, and hence secure quantum key distribution, may be achieved over any integer number m of communication rounds.

In a second aspect, the disclosure relates to a computer program or to a computer program product or to a computer-readable storage medium comprising computer-readable instructions which, when executed by a computer, cause the computer to carry out the method with some or all of the steps described above.

In a third aspect, the disclosure relates to a communication system comprising means adapted to implement the method with some or all of the steps described above with reference to the first aspect.

According to an embodiment, the communication system may comprise a sending unit, wherein the sending unit may be adapted to be connected to a plurality of receiving units by a plurality of communication channels.

The sending unit may be adapted to transmit at least one first electromagnetic test pulse to a first receiving unit among the plurality of receiving units via a first communication channel among the plurality of communication channels.

The sending unit may be further adapted to determine a first signal loss in the first communication channel based on the at least one first electromagnetic test pulse detected at the first receiving unit.

The sending unit may be further adapted to transmit at least one second electromagnetic test pulse to a second receiving unit among the plurality of receiving units via a second communication channel among the plurality of communication channels.

The sending unit may be further adapted to determine a second signal loss in the second communication channel based on the at least one second electromagnetic test pulse detected at the second receiving unit.

The sending unit may be further adapted to transmit a first sequence of electromagnetic signal pulses to the first receiving unit via the first communication channel for establishing a first cryptographic key shared between the sending unit and the first receiving unit, wherein each electromagnetic signal pulse of the first sequence of electromagnetic signal pulses corresponds to a bit of a first random bit sequence according to a key distribution protocol.

The sending unit may be further adapted to determine a first key bandwidth share for the first sequence of electromagnetic signal pulses, wherein both the determined first signal loss and the determined second signal loss are taken into account for determining the first key bandwidth share.

The sending unit may be further adapted to implement the method with some or all of the steps described above with reference to the first aspect.

### Brief Description of the Figures

The techniques of the present disclosure and the advantages associated therewith are best understood from a detailed description of embodiments in conjunction with the accompanying drawings, in which:
- Fig. 1: is a schematic illustration of a communication system according to an embodiment;
- Fig. 2: is a schematic illustration of another communication system according to an embodiment;
- Fig. 3a: is a schematic illustration of a key distribution protocol in accordance with an embodiment;
- Fig. 3b: is a schematic illustration of a key distribution protocol in accordance with another embodiment;
- Fig. 3c: is a schematic diagram illustrating the key request procedure in a key distribution protocol in accordance with an embodiment;
- Fig. 4: schematically illustrates different bandwidth weights as a function of the key generation rate, according to an embodiment;
- Fig. 5a, 5b: schematically illustrate a choice of a cut-off parameter for the bandwidth weights by means of an optimization, according to an embodiment;
- Fig. 6: depicts a table that lists the amount of cryptographic key shared between a sending unit and 10 receiving units, for different cut-off parameters for the bandwidth weights, according to an embodiment;
- Fig. 7: depicts a table that lists the amount of cryptographic key shared between a sending unit and 50 receiving units, for different cut-off parameters for the bandwidth weights, according to an embodiment; and
- Fig. 8: is a flow diagram illustrating a method for establishing a plurality of secret cryptographic keys according to an embodiment.

### Detailed Description

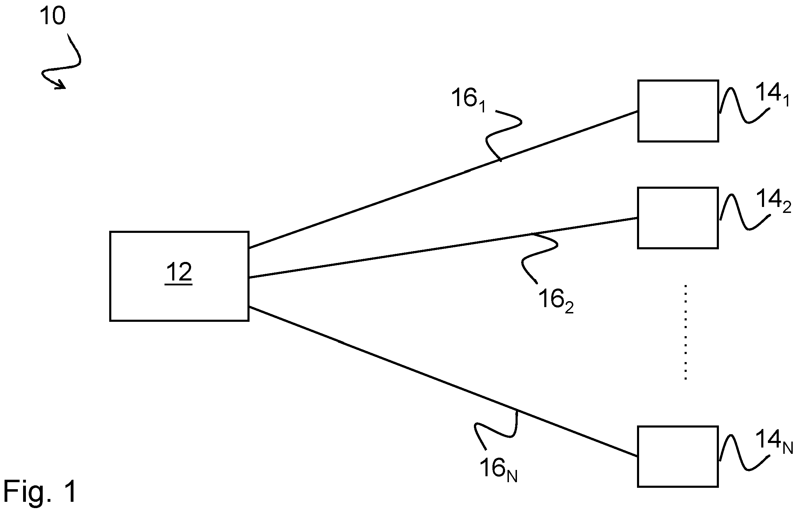

Fig. 1 is a schematic illustration of a communication system 10 that may be employed in the context of the present disclosure. The communication system 10 comprises a sending unit 12 (conventionally denoted or associated with "Alice") and a plurality of N receiving units 14₁, 14₂, ..., 14_{N} (conventionally denoted or associated with "Bob"), that are coupled to the sending unit 12 by a respective plurality of communication channels 16₁, 16₂, ..., 16_{N}, wherein N may be any positive integer number.

The communication channels 16₁, 16₂, ..., 16_{N} may be adapted to transmit quantum information and/or classical information between the sending unit 12 and the plurality of receiving units 14₁, 14₂, ..., 14_{N}. In particular, the communication channels may be or may comprise optical fiber links 16₁, 16₂, ..., 16_{N}.

Optionally, some or all of the communication channels 16₁, 16₂, ..., 16_{N} may comprise optical amplifiers (not shown in Fig. 1) to enhance the communication distance, such as Erbium Doped Fiber Amplifiers (EDFA).

In addition to the optical fiber links 16₁, 16₂, ..., 16_{N}, the sending unit 12 and the plurality of receiving units 14₁, 14₂, ..., 14_{N} may be linked by a classical information channel, such as a telephone line or an authenticated public classical channel (not shown in Fig. 1).

Alice 12 and the plurality of Bobs 14₁, 14₂, ..., 14_{N} may employ the communication system 10 and employ quantum techniques to share between them cryptographic keys about which an eavesdropper (conventionally denoted or associated with "Eve") tapping on the communication channels 16₁, 16₂, ..., 16_{N} can obtain no or only a negligible amount of information. These cryptographic keys could then be used by Alice 12 and the plurality of Bobs 14₁, 14₂, ..., 14_{N} as a cryptographic one-time pad for interchanging sensitive information, or as a resource for other cryptographic tasks.

In order to establish a secret cryptographic key, according to an embodiment the sending unit 12 may be adapted to transmit at least one first electromagnetic test pulse to a first receiving unit 14₁ among the plurality of receiving units 14₁, 14₂, ..., 14_{N} via a first communication channel 16₁ among the plurality of communication channels 16₁, 16₂, ..., 16_{N}. The sending unit may be further adapted to determine a first signal loss in the first communication channel 16₁ based on the at least one first electromagnetic test pulse detected at the first receiving unit 14₁.

Similarly, the sending unit 12 may be further adapted to transmit at least one second electromagnetic test pulse to a second receiving unit 14₂ among the plurality of receiving units via a second communication channel 16₂ among the plurality of communication channels 16₁, 16₂, ..., 16_{N}. The sending unit 12 may be further adapted to determine a second signal loss in the second communication channel 16₂ based on the at least one second electromagnetic test pulse detected at the second receiving unit 14₂.

The sending unit 12 may be further adapted to transmit a first sequence of electromagnetic signal pulses to the first receiving unit 14₁ via the first communication channel 16₁ for establishing a first cryptographic key shared between the sending unit 12 and the first receiving unit 14₁, wherein each electromagnetic signal pulse of the first sequence of electromagnetic signal pulses corresponds to a bit of a first random bit sequence according to a key distribution protocol.

The sending unit 12 may be further adapted to determine a first key bandwidth share for the first sequence of electromagnetic signal pulses, wherein both the determined first signal loss and the determined second signal loss are taken into account for determining the first key bandwidth share.

In an exemplary key distribution protocol, Alice 12 may encode a random bit string into a sequence of coherent light pulses and send them to one of the Bobs 14₁, 14₂, ..., 14_{N} via the respective communication channel 16₁, 16₂, ..., 16_{N}. The resulting signals may then be received and measured by Bob 14₁, 14₂, ..., 14_{N}, and the results may be exchanged via an authenticated classical communication channel. An eavesdropper could potentially seize part of the optical signal, for instance by bending the transmitting optical fiber and detecting the transcending optical modes. However, Alice 12 and the respective Bob 14₁, 14₂, ..., 14_{N} may monitor the losses in the communication channel 16₁, 16₂, ..., 16_{N} and may perform a loss control employing the techniques generally described in EP 4 047 860 A1 in the context of a communication scenario having a single sending unit and a single receiving unit. Full reference is made to EP 4 047 860 A1 for the details of how the loss control may be established in each of the communication channels 16₁, 16₂, ..., 16_{N}.

The loss control enables Alice 12 and the respective Bobs 14₁, 14₂, ..., 14_{N} to adopt an efficient bit ciphering and measurement scheme, in which Alice 12 picks certain values of signal intensities which are optimal as far as an informational advantage over Eve is concerned. In a concerted manner, the respective Bob 14₁, 14₂, ..., 14_{N} may adjust his measurement routine, which may give the authorized parties additional leverage as far as post-selection is concerned. After transmitting and receiving the random bit string, Alice 12 and the respective Bob 14₁, 14₂, ..., 14_{N} may use an authenticated public classical channel to perform information reconciliation (increasing their informational advantage over Eve) and privacy amplification to eradicate Eve's information without sacrificing too many key bits.

Employing the techniques described above, Alice 12 may subsequently establish secure cryptographic keys with any or all of the respective Bobs 14₁, 14₂, ..., 14_{N} individually, such as by time-sharing and multiplexing the quantum key distribution resources. The key generation may proceed in a plurality of *R* communication rounds as prescribed by the key distribution protocol, wherein *R* may denote any positive integer. In each of the *R* rounds, each of the Bobs 14₁, 14₂, ..., 14_{N} may request a certain amount of secret key from Alice 12. In accordance with the key requests obtained from the respective Bobs 14₁, 14₂, ..., 14_{N}, Alice 12 may set the respective key bandwidth shares, which may denote the fraction of the total number of electromagnetic signal pulses sent by Alice 12 in a particular communication around from Alice 12 to the respective Bob 14₁, 14₂, ..., 14_{N}.

According to the techniques of the present disclosure, when determining the bandwidth share for the first Bob 14₁, Alice 12 may take into account the determined signal losses for all of the other Bobs 14₂, ..., 14_{N} in the communication system 10. Alice 12 may thereby establish and uphold the line control simultaneously with all the respective Bobs 14₁, 14₂, ..., 14_{N} in the communication system 10, possibly across a plurality of communication rounds *R* and regardless of whether or not a specific Bob 14₁, 14₂, ..., 14_{N} has requested any secret key from Alice 12 during a particular communication round.

By consistently maintaining the line control, it may be ensured that the information that an eavesdropper Eve will be able to retrieve can be uniformly limited, and hence the security of the quantum key distribution protocol can be enhanced.

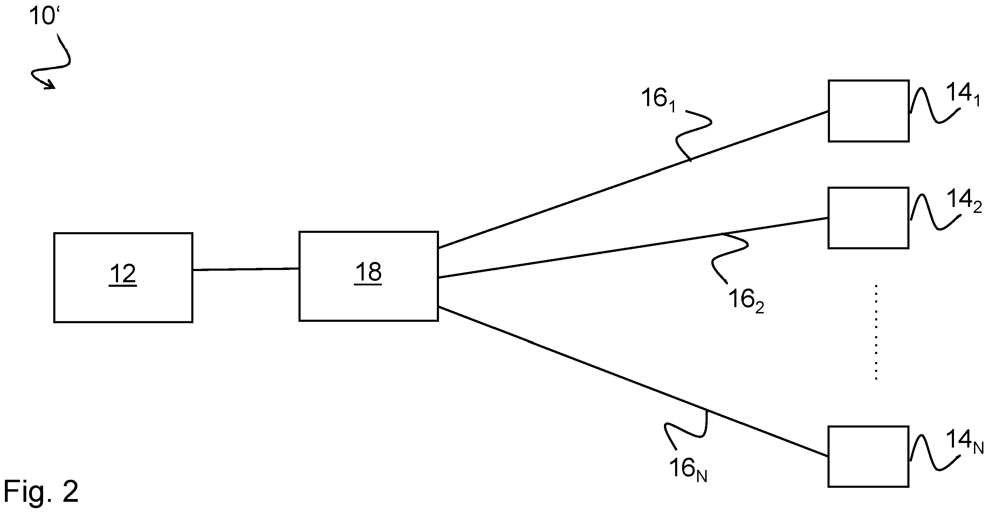

Fig. 2 shows a communication system 10' that generally corresponds in design and functionality to the communication system 10 described above with reference to Fig. 1, and corresponding elements share the same reference signs. In the configuration of Fig. 2, the sending unit 12 and the plurality of receiving units 14₁, 14₂, ..., 14_{N} are arranged in a star topology, and an optical switch unit 18 is employed to selectively switch the signal transmission from the sending unit 12 to each of the respective receiving units 14₁, 14₂, ..., 14_{N}.

We assume that Alice 12 controls the optical switch unit between Bob ₁ 14 ₁, Bob ₂ 14 ₂, ... and Bob *_{N}* 12 *_{N},* and that Alice 12 is the only user capable of sending signals via the quantum communication channels 16₁, 16₂, ..., 16_{N}. In turn, the respective Bobs 14₁, 14₂, ..., 14_{N} can only exchange secret key with the other users by requiring Alice to perform a corresponding key distribution. In order for the physical loss control to be performed constantly in all branches of the network, Alice 12 may continuously switch the direction of the transmission of the test pulses and signal pulses. We will now determine the limitations for the rates of the key distribution between Alice 12 and each Bob 14₁, 14₂, ..., 14_{N} and illustrate the operation of the switch 18.

We assume that all service commands, such as an intensity cross-check of the test pulses and any post-processing information exchange, are transmitted via an authenticated classical channel (not shown in Fig. 2). The authentication, in turn, imposes an extra key cost - i.e., some minimum amount of key should be distributed as electromagnetic signal pulses to all of the respective Bobs 14₁, 14₂, ..., 14_{N} with which the line control shall be maintained, even in the absence of an active key distribution.

### (a) Authentication Protocol

The authentication itself utilizes the symmetric keys distributed via QKD. Thus, the authentication keys should be constantly restocked, even if the respective Bob 14₁, 14₂, ..., 14_{N} is idle and does not ask for key distribution. To let Bob 14₁, 14₂, ..., 14_{N} perform control, Alice 12 may distribute a minimum amount of key by sending signal pulses along with each test pulse. The number of such pulses per one test pulse is calculated to replenish Bob's pre-shared key buffer at the moment when a new authentication tag is to be generated.

We assume that a secret key *K_{A}* of length *l*(*K_{A}*) should be refreshed once per *l*ₘₐₓ bits of the authenticated messages. For instance, for *Poly1305*-based authentication protocols we consider *l*(*K_{A}*) = 512 bits per *l*ₘₐₓ = 2²⁰ bits of messages. The following quantity of bits for authentication is effectively "wasted" by a single message M: $l \left(M\right) \times \frac{l \left({K}_{A}\right)}{{l}_{max}} .$

Additionally, each message can be symmetrically encrypted. This will only add some cost regarding the pre-shared key usage, increasing the latter value.

Let *M*_{c} denote the messages about a single test pulse's intensity for the loss control performance sent from Alice 12 to Bob ᵢ 14ᵢ and vice versa, for some i = 1, ..., N. Similarly, we introduce *M*_{QKD}, a combination of messages for post-processing per one sent information-carrying pulse. Thus, one pulse sent by Alice 12 may require $l \left({M}_{QKD}\right) \times \frac{l \left({K}_{A}\right)}{{l}_{max}}$ bits from a pre-shared key to be used for post-processing purposes. We also introduce the message type *M*_{request} in which Bob ᵢ 14ᵢ asks Alice 12 for a start of a new QKD session. Alice 12 also uses this message type to react to this request.

### (b) Line Control

During active QKD sessions and out of them, Alice 12 performs a line control with all the N receiving units 14ᵢ in the communication system 10, 10' and infers the corresponding proportion of local losses *r_{E,i}.* For the security of the corresponding quantum channels, it is advisable to constantly (at least, with a frequency *L_{c}*) check the losses not to give an eavesdropper Eve space for manipulations of the channel between the switch 18 and the receiving unit 14ᵢ. We will now find the minimum rate *Lᵢ* at which Alice 12 should send signal pulses to Bobᵢ 14ᵢ to guarantee authentication for the line control.

The line control may be divided into the following steps:
1. Alice 12 sends test pulses to Bobᵢ 14ᵢ with a frequency *L_{c}* (same for all the Bobs 14ᵢ).
2. After receiving a test pulse, Alice 12 and Bobᵢ 14ᵢ send the messages of type *M_{c}* via the classical channel. The users 12, 14ᵢ proactively spend a part of the pre-shared key on channel authentication to send these messages securely. They can also encrypt these messages using the same pre-shared key, but this step is considered optional. These messages may be accessible only to this pair of users 12, 14ᵢ. Thus, for this step, Alice 12 and Bobᵢ 14ᵢ use a pre-shared key common only for Alice 12 and the respective Bob 14ᵢ.
3. According to this information, both Alice 12 and Bobᵢ 14ᵢ evaluate the surplus/decline of losses *rᵢ* in a corresponding communication channel 16ᵢ. With this knowledge, they may:
   - decide whether the communication can be considered secure or not by comparing the results with the previous ones,
   - estimate an expected key generation rate $\frac{{L}_{f}}{L} \left({r}_{E , i}\right)$ (by averaging the received number with the analysis carried out previously).
   Bob 14ᵢ may then follow several post-processing steps (such as privacy amplification, requiring some additional key for authentication) to replenish a pre-shared key buffer for new authentications progressively.
4. Alice 12 evaluates the pulse repetition frequencies *L*_{*i*,min} suitable to carry out line control and its requirements regarding the pre-shared key usage. They can be found from the following equation: ${L}_{i , f} = \frac{{L}_{f}}{L} \left({r}_{E , i}\right) \times {L}_{i , min} = {L}_{c} \times l \left({M}_{c}\right) \frac{l \left({K}_{A}\right)}{{l}_{max}} + {L}_{i , min} + l \left({M}_{QKD}\right) \frac{l \left({K}_{A}\right)}{{l}_{max}} ,$ meaning that the "losses" of the pre-shared key due to line control messages processing are equal to the overall key obtained by Bobᵢ 14ᵢ during this session.
   Therefore, to correctly conduct a line control with Bob; 14ᵢ, Alice 12 may send test pulses with frequency *L_{c}* and signal pulses with frequency *L*_{*i*,min} determined as follows: ${L}_{i , min} = \frac{{L}_{c} \times l \left({M}_{c}\right) \frac{l \left({K}_{A}\right)}{{l}_{max}}}{\frac{{L}_{f}}{L} \left({r}_{E , i}\right) - l \left({M}_{QKD}\right) \frac{l \left({K}_{A}\right)}{{l}_{max}}} .$

### (c) Key distribution allocation

At her end, Alice 12 generates signal and control pulses at some constant rates L and *N × L_{c}*, respectively. The pulses may be appropriately routed to Bobᵢ 14ᵢ. We consider three routing regimes:
1. If only one of the users Bobᵢ 14ᵢ needs the key (*active* session), the others Bobⱼ 14ⱼ for j ≠ i may get the minimum number of signal pulses *L*_{*i*,min}, and Bobᵢ 14ᵢ gets all the rest, i.e., *Lᵢ = L* - Σ*_{i≠j} L*_{*j*,min}. For instance, if only Bob₁ 14₁ expressed his desire to distribute a key with Alice 12, *Lᵢ* will be defined in the following way: $\begin{matrix}{L}_{2} = {L}_{2 , min} = \frac{{L}_{c} \times l \left({M}_{c}\right) \frac{l \left({K}_{A}\right)}{{l}_{max}}}{\frac{{L}_{f}}{L} \left({r}_{E , 2}\right) - l \left({M}_{QKD}\right) \frac{l \left({K}_{A}\right)}{{l}_{max}}} , \\ ⋯ \\ {L}_{N} = {L}_{N , min} = \frac{{L}_{c} \times l \left({M}_{c}\right) \frac{l \left({K}_{A}\right)}{{l}_{max}}}{\frac{{L}_{f}}{L} \left({r}_{E , N}\right) - l \left({M}_{QKD}\right) \frac{l \left({K}_{A}\right)}{{l}_{max}}} , \\ {L}_{1} = L - {\sum }_{i = 2}^{N} {L}_{i , min} ,\end{matrix}$ where we assume that the latter value always exceeds *L*_{1,min}. This assumption can be made under the assumption that the critical losses in the users' communication channels are bounded so small that the sum ${\sum }_{i = 1}^{N} {L}_{i , min}$ never exceeds *L*.
2. If none of the users Bobᵢ 14ᵢ needs the key (*passive* session), $\frac{{L}_{f}}{L} \left({r}_{E , 1}\right) \left({L}_{1}-{L}_{1 , min}\right) =$ $\frac{{L}_{f}}{L} \left({r}_{E , 2}\right) \left({L}_{2}-{L}_{2 , min}\right) = ⋯ = \frac{{L}_{f}}{L} \left({r}_{E , N}\right) \left({L}_{N}-{L}_{N , min}\right)$ and $L = {\sum }_{i = 1}^{N} {L}_{i}$*. Lᵢ* can then be found as follows ${L}_{i} = \frac{L + {L}_{i , min} {\sum }_{j \neq i} \frac{\frac{{L}_{f}}{L} \left({r}_{E , i}\right)}{\frac{{L}_{f}}{L} \left({r}_{E , j}\right)} - {\sum }_{j \neq i} {L}_{j , min}}{1 + {\sum }_{j \neq i} \frac{\frac{{L}_{f}}{L} \left({r}_{E , i}\right)}{\frac{{L}_{f}}{L} \left({r}_{E , j}\right)}} .$
3. Several users need the key (*combined* session). In this case, the distribution of all the generated pulses between N nodes is defined in a specific way described further below in the Section Key Allocation Table.

Let us now address the routing problem. Apart from line control needs, the users Bobᵢ 14ᵢ can require a QKD session to store some key for further communication. This request translates into a surplus to a minimum pulse repetition frequency. To describe this procedure precisely, we provide an instruction to follow by the *N* + 1 users to perform communication.
1. First, Bobᵢ 14ᵢ requests a QKD session by sending a cryptographic key request via an authenticated classical channel. For this purpose, he sends a classical message to Alice 12 with corresponding information. The details about the timing and how this message is sent and processed are described further below in the Section Key Request Procedure.
   In particular, Bob may only send a cryptographic key request at given points in time, and not more often than once a pre-determined *T_{KAT}* period. The message is sent exactly as *M*_{c} but with the use of a symmetric key common for all users. This requirement allows everybody to be aware of the cryptographic key request. The advantages of this approach, as well as the instruction for pre-shared key allocation, are described in further detail below in the Section Pre-Shared Key Allocation.
2. In response, all the users Bobᵢ 14ᵢ receive the same type of message from Alice 12 with the information about a start of a desired session and a sending frequency chosen for this session for each of the users Bobᵢ 14ᵢ. Thus, all the users Bobᵢ 14ᵢ receive the full information about this session in one message. Firstly, this allows Bobᵢ 14ᵢ to check further whether these conditions are respected. If this is not the case, the user can independently suspect the presence of an eavesdropper. Secondly, it allows the receiver Bobᵢ 14ᵢ to verify the correctness of the fixed regime, facilitates clock alignment between Alice 12 and all the Bobs Bobᵢ 14ᵢ, and helps the latter prepare for further reception.
3. In parallel with continuously provided line control sessions between Alice 12 and Bobs Bobᵢ 14ᵢ, an active key distribution session begins between Alice and a (the) desired user(s) Bobᵢ 14ᵢ. The frequency of Alice's key distribution to Bobᵢ 14ᵢ may be adjusted according to the demands of the respective user, adopting one of the routing regimes described at the beginning of this section. In any case, we state that *Lᵢ* ≥ *L*_{*i*,min}. Additionally, the overall frequency L does not exceed a maximum value dictated by practical limitations. We assume that Alice 12 keeps this pulse repetition frequency at the maximum level during all three session modes, regardless of the users' requests.
4. If a user Bobᵢ 14ᵢ requires a new QKD session, it starts after the expiration of the current *T*_{KAT} period. In this case, the sending frequency may be changed for all the users, as described in the Section Key Allocation Table. Corresponding messages are posted by Alice 12 publicly.
5. The combined session regime also covers the situation where one Bob 14ᵢ requires a key distribution with one of the other Bobs 14ⱼ, j ≠ i. At this point, two identical keys may be distributed between these users 14ᵢ and 14ⱼ simultaneously, i.e., Alice 12 sends the same pulses to two users 14ᵢ and 14ⱼ as if they both required a key session for the same number of bits. For this case, pulse repetition frequencies related to these two users 14ᵢ and 14ⱼ may be defined exactly as for a regular combined session.
6. It is important to note that each user 14ᵢ may have two stacks of secret keys: common only with Alice 12 and a particular Bob 14ᵢ and common for all the users. This sorting of secret keys is advantageous because, as we have shown before, one may use bits from both of these groups for different types of public messages.

### (d) Retransmitting the Signals

After aligning users' demands, Alice 12 may establish an appropriate regime for the switch functioning (see more on how Alice 12 controls the switch 18 in the Section The Control of a Switch). In particular, Alice 12 may specify when and for which period the pulses will be addressed to Bobᵢ 14ᵢ. For this purpose, in this section, we propose a way how Alice 12 can control the switch 18 to distribute correct portions of pulses between the different users Bobᵢ 14ᵢ.

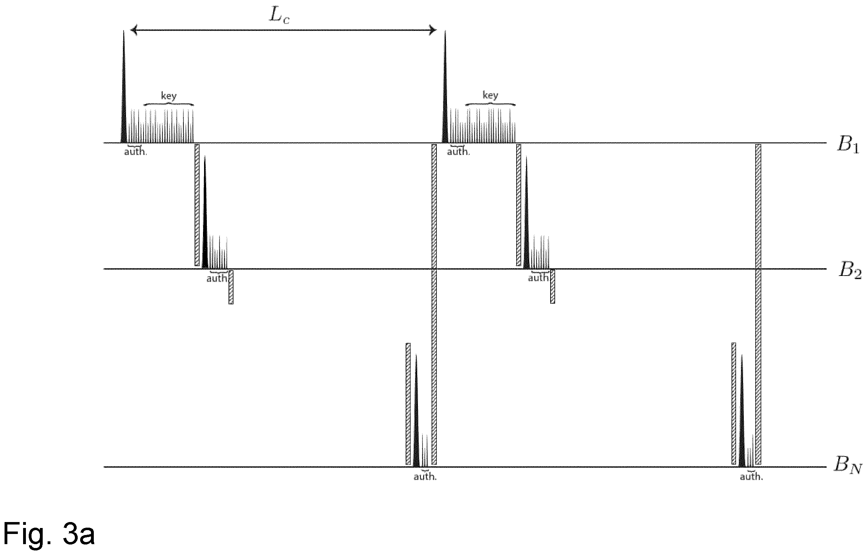

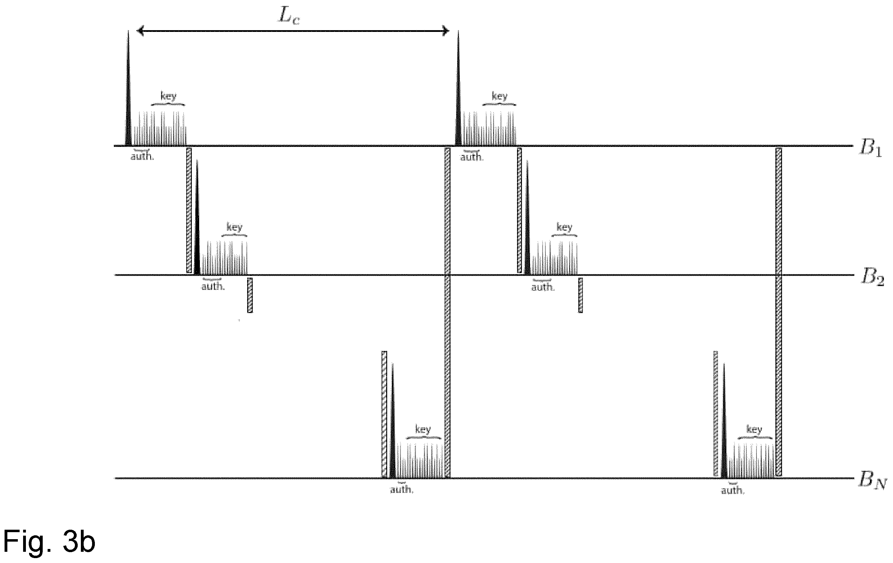

Figures 3a and 3b illustrate the commands sent to the switch 18 and the functioning of the switch 18. Each track signifies a quantum communication channel 16ᵢ attributed to one of the users Bobᵢ 14ᵢ, and the pulses on each track qualitatively depict signals sent to the corresponding Bobᵢ 14ᵢ. When the sequence of the latter breaks, the switch 18 is programmed to redirect further pulses coming from Alice's apparatus to the other users 14ⱼ, j ≠ i. In particular, Figures 3a and 3b illustrate at which moments and to which users the optical switch unit 18 retranslates signals from Alice's source. This operation is designated by a rectangle from one user's line to the other user's line, wherein "key" on these schemes signifies the distribution of the key required by the respective Bobᵢ 14ᵢ, and "auth." represents information-carrying pulses employed to provide further authentication and probably encryption procedures to operate via a classical channel (cf. the Section Authentication Protocol).

Fig. 3a corresponds to a communication scenario in which Alice distributes a cryptographic key only to a single user B₁. The remaining users B₂, ..., B_{N} are passive. They likewise receive small amounts of secret key, but only for authentication purposes to establish the line control with all the users B₁, ..., B_{N}. The length of the authentication key may differ among the users B₁, ..., B_{N}, to accommodate differences in the respective communication channels 16₁, ..., 16_{N} that link them to the sender Alice 12, as may be determined from the respective signal losses.

In the alternative embodiment of Fig. 3b, Alice distributes a cryptographic key to a plurality users, and possibly to all the users B₁, ..., B_{N}.

Let us consider Alice 12 having an active QKD session with Bob₁ 14₁. The switch 18 may be programmed to redirect the following number of pulses after a test pulse to different users:
- ${N}_{1} = \frac{L - {\sum }_{i \neq 1} {L}_{i , min}}{{L}_{c}}$ to Bob₁ 14₁
- Then ${N}_{2} = \frac{{L}_{2 , min}}{{L}_{c}}$ to Bob₂ 14₂
- etc., ${N}_{N} = \frac{{L}_{N , min}}{{L}_{c}}$ to Bob_{N} 14_{N}

Several iterations of this process are depicted in Fig. 3b, respectively. These steps may be repeated until the *T*_{KAT} period has expired, and new pulse repetition frequencies may be subsequently distributed between all the users.

We also note that the number of signal pulses *N*₁, *N*₂, ... , *N_{N}* sent to the respective users 14₁, 14₂, ..., 14_{N} are functions of {*r_{E,i}*}_{*i*∈1̅,̅.̅.̅.̅*̅N̅*̅}. Therefore, after each expiration of the *T*_{KAT} period (also accompanied by another update of the last parameters), Alice 12 may change *N*₁, *... N_{N}* correspondingly by sending this information to a trustworthy person controlling the switch 18.

Assuming that Alice 12 has a passive QKD session, we suggest fixing *Lᵢ* and *L*₂ such that: $\frac{{L}_{f}}{L} \left({r}_{E , 1}\right) \left({L}_{1}-{L}_{1 , min}\right) = \frac{{L}_{f}}{L} \left({r}_{E , 2}\right) \left({L}_{2}-{L}_{2 , min}\right) .$

In case we require Eq. (6) to be followed, the users Bobᵢ 14ᵢ will finally receive an equal amount of secret key per unit of time. Thus, the more significant losses on the line with Bobᵢ 14ᵢ are, the more pulses are to be sent to him. Following the protocol described above, the pulse repetition frequencies corresponding to Bob₁ 14₁ and Bob₂ 14₂ are as follows: $\begin{matrix}{L}_{1} = \frac{L + \frac{\frac{{L}_{f}}{L} \left({r}_{E , 1}\right)}{\frac{{L}_{f}}{L} \left({r}_{E , 2}\right)} {L}_{1 , min} - {L}_{2 , min}}{1 + \frac{\frac{{L}_{f}}{L} \left({r}_{E , 1}\right)}{\frac{{L}_{f}}{L} \left({r}_{E , 2}\right)}} \\ {L}_{2} = \frac{L - {L}_{1 , min} + \frac{\frac{{L}_{f}}{L} \left({r}_{E , 2}\right)}{\frac{{L}_{f}}{L} \left({r}_{E , 1}\right)} {L}_{2 , min}}{1 + \frac{\frac{{L}_{f}}{L} \left({r}_{E , 2}\right)}{\frac{{L}_{f}}{L} \left({r}_{E , 1}\right)}}\end{matrix}$

The protocol may adjust in the way that the switch 18 redirects the following number of signal pulses to Bobs' sides:
- ${N}_{1} = \frac{{L}_{1}}{{L}_{c}}$ to Bob₁ 14₁
- Then ${N}_{2} = \frac{{L}_{2}}{{L}_{c}}$ to Bob₂ 14₂
- etc. ${N}_{N} = \frac{{L}_{N}}{{L}_{c}}$ to Bob_{N} 14_{N}

In case when the session is combined, the pulse repetition frequencies *Lᵢ* are defined in Eq. (25) of the Section Key Allocation Table. When the session is passive, the values of *Lᵢ* are equal to the ones found in Eq. (5).

### (e) Length of Public Messages

As we saw in the Section Line Control, it is advantageous to know how many bits from a pre-shared string the post-processing of an ordinary QKD session requires. To this end, we should first estimate the number of bits necessary to compose all the important information in the messages M*_{c}*, *M*_{request}, and *M*_{QKD},

The messages of type *M_{c}* contain:
(a) (1 bit) The identifier of the line to be analyzed: *0* for *Bob*₁ and 1 for *Bob*₂,
(b) (27 bits) Timestamp - the moment of Bob's reception of the test signal, ms precision,
(c) (13 bits) Intensity: (4 bits) order of the number (maximum value around 14) and (9 bits) value with a precision of 0.5% (e.g. 3.14 × 10¹²).
We suggest Bob first sends his measured intensity. Then, Alice estimates to which test pulse the information corresponds (according to the timestamp of the reception).
Therefore, *l*(*M_{c}*) = 41.

*M*_{request} carries information about:
(a) (2 bits) The identifier of the author: *00* for Alice, *01* for *Bob*₁, *10* for *Bob*₂,
(b) (1 bit) The desired interlocutor: *0* for Alice, *1* for *Bob*₁₍₂₎ (when the sender is *Bob*₂₍₁₎)*,*
(c) (8 bits) The number of bits required: (4 bits) the order of the number (from 1 to 15) and (4 bits) a one-digit factor,
(d) (27 bits) The moment when the desired session is to be started. We suppose *00* signifies "as soon as possible" , *01* - "in 30 minutes" , *10* - "in one hour" , *11* - "the request is not urgent" ,
(e) (27 bits) The moment when the request is created.
Thus, *l*(*M*_{request}) = 65.

A composition of the messages *M*_{QKD} is a standard procedure defined according to the needs of certain post-processing steps and the methods used to realize them.

### (f) Performance Comparison

In this section, we search for a comparison (in terms of performance) between this protocol and a standard QKD protocol. Let *L*ₘₐₓ be the maximum pulse repetition frequency. A secret key rate for one user (if the second is not willing to distribute any information) can be calculated as follows: ${L}_{1 , f} = \frac{{L}_{f}}{L} \left({r}_{E , 1}\right) \times \left({L}_{max}-{L}_{1 , min}-{L}_{2 , min}\right) ,$ whereas in a normal two-user QKD session, one would have: $\frac{{L}_{f}}{L} \left({r}_{E , 1}\right) {L}_{max}$ bits per second.

Thus, the difference in performance between a standard QKD communication and the one for three nodes amounts to: $\frac{{L}_{f}}{L} \left({r}_{E , 1}\right) {L}_{max} - {L}_{1 , f} = \frac{{L}_{f}}{L} \left({r}_{E , 1}\right) \times \left({L}_{1 , min}+{L}_{2 , min}\right) .$

### (g) Key request procedure

In realistic communication scenarios, the classical channel allows interventions by (malicious) third parties. This means that not all the public messages posted by one user can be expected to be received by the other. Thus, to not miss any QKD session requests, we may force all the users to expect the reception of particular messages at a given time. Additionally, we can rely on the fact that the optical switch unit 18, as a part of the QKD communication system 10', may require a pre-shared key usage for changing its regime. This is due to the fact that Alice 12 controls the switch 18 by sending commands via an authenticated classical channel. Some pre-shared key is thus to be spent on authentication purposes (as decribed in more detail in the Section The Control of a Switch). We, therefore, assume the switch functioning to be modified discretely, only once in a pre-defined period. For these two reasons, any QKD session should be required only at the specific moments when everybody expects a message to be received.

Thus, we may divide the timeline into short intervals of *T*_{KAT} in length. The beginning of the latter is the place for users to express their desire to start a new session. After a certain pre-defined period, the sender Alice 12 should respond to this (these) request(s). Shortly after that, all the users Bobᵢ 14ᵢ should confirm the reception of this message. Only if all the users Bobᵢ 14ᵢ confirm this reception, the session with all the users in the current key allocation table may be started. Otherwise, the sender Alice 12 continues to control all the lines, tries to get in contact with the user(s) whose response(s) is(are) missing, and excludes their positions from the key allocation table (see details of request pool formation in the Section Key Allocation Table further below), and starts a session with the rest of them with key repetition rates announced previously. After a current session is terminated, the key allocation table may be modified.

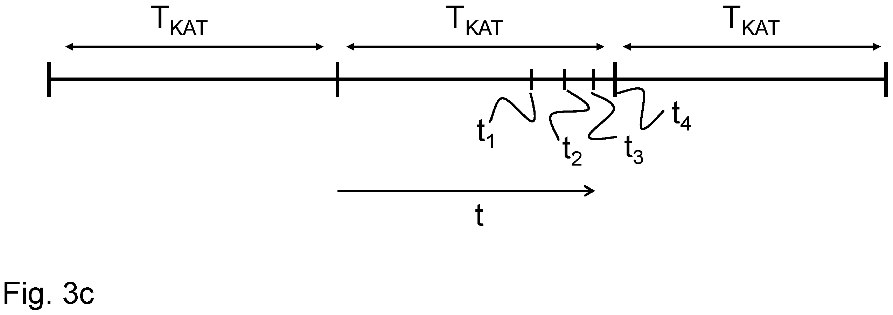

A key request procedure spanning a plurality of sessions according to an embodiment is schematically illustrated in Fig. 3c.

Time t is running from left to right in Fig. 3c, and is divided up into several communication rounds of *T*_{KAT} in length. Fig. 3c shows three communication rounds, but in general a key distribution protocol may comprise any number of communication rounds.

In each round, at a time t₁ the users Bobᵢ 14ᵢ may announce their key distribution requests to Alice 12. At a later time t₂, Alice 12 may respond to these requests by announcing parameters for the subsequent key distribution and line control, as described above, such as with reference to Fig. 3a and Fig. 3b. The signal losses that Alice 12 has determined in the communication channels 16ᵢ with the various receiving units Bobᵢ 14ᵢ in the previous communication round may now be employed to determine the respective key bandwidth shares to the various receiving units Bobᵢ 14ᵢ in the present round and to announce them to the users.

At a later time t₃, the users Bobᵢ 14ᵢ may announce the reception of the overall session regime. At a still later time t₄, Alice 12 ends the session and begins a new one with the users Bobᵢ 14ᵢ that are responding. The specific timing of the times t₁, ..., t₄ within the intervals *T*_{KAT} may be selected by the sender Alice 12 and/or the users Bobᵢ 14ᵢ, may be pre-determined and previously agreed between the communication partners, and may vary from protocol to protocol.

The key allocation according to an embodiment, such as the embodiment of Fig. 3c, will now be described in additional detail.

### (h) Key Allocation Table

The splitting distribution of quantum key optical pulses between several users Bobᵢ 14ᵢ may be decided upon by the Key Allocation Table (KAT) described below. To reduce the communication load to the optical switch scheduler/controller, we may recalculate the KAT only once in a specified amount of time *T_{KAT}.* All clients' data requests received by Alice 12 will take effect only after the KAT recalculation and subsequent upload of the calculated bandwidth shares to the optical switch scheduler/controller.

### (i) Order of Operation

As a first step, the users Bobᵢ 14ᵢ announce their requests for some amount of secret key *Dᵢ*. Alice 12 puts them together into a list and calculates the expected key generation rates $\frac{{L}_{f}}{L} \left({r}_{E , i}\right)$ for all users Bobᵢ 14ᵢ depending on the loss rate to the respective Bob.

In the next step, Alice 12 calculates the projected shares needed to distribute an equal amount of secret keys between all users Bobᵢ 14ᵢ presented in the KAT. The user's "fair" key bandwidth share may be calculated as follows, ${L}_{i}^{∗ , fair} = \frac{{L}_{a}}{{\sum }_{j} {\left[\frac{{L}_{f}}{L}\left({r}_{E , j}\right)\right]}^{- 1}} {\left[\frac{{L}_{f}}{L}\left({r}_{E , i}\right)\right]}^{- 1} ,$ where *Lₐ* is the total pulse rate available for key distribution, not accounting for the pulses needed for line control and other post-processing purposes, ${L}_{a} = L - {\sum }_{i = 1}^{N} {L}_{i , min}$

In this way we can ensure that every Bobᵢ 14ᵢ will receive equivalent amount of final key *L_{f,i}*, ${L}_{f , i} = \frac{{L}_{a}}{{\sum }_{j} {\left[\frac{{L}_{f}}{L}\left({r}_{E , j}\right)\right]}^{- 1}} , ↦ {L}_{f , i} = {L}_{f , j} ∀ i , j$

The final frequencies of pulses that will go to the corresponding recipients Bobᵢ 14ᵢ will, of course, account for all service pulses ${L}_{i} = {L}_{i}^{∗ , fair} + {L}_{i , min} .$

The following table is a simple exemplary Key Allocation Table in which *T_{KAT}* = 1*s* and *Lₐ = 1000Hz.*

| *User* | *Requested data* | *Expected key generation rate* | *User's "fair" key bandwidth share* |
|---|---|---|---|
| $\frac{{L}_{f}}{L} \left({r}_{E , i}\right)$ ${L}_{i}^{∗ , fair}$ | *Dᵢ*, bits | | , Hz |
| Bob2 | 17 | 0.059 | 471 |
| Bob1 | 322 | 0.111 | 251 |
| Bob3 | 1.03 · 10¹⁶ | 0.100 | 278 |

### (j) QKD Channel Clogging

In some communication scenarios, a challenge of the outlined scheme may be the "clogging" of the key distribution by one or several users. If Alice's connection to some users Bobᵢ 14ᵢ is substantially worse than to others, the overall key distribution rate would significantly suffer, which would affect even the users with good connections.

To address this issue, we propose the use of non-linear weight coefficients, denoted as *Wᵢ*, for the key bandwidth shares ${L}_{i}^{∗ , fair}$*.* This can be expressed analogously to Eq. (10) as: ${L}_{i}^{∗ , fair} = {L}_{a} \frac{{W}_{i}}{{\sum }_{j} {W}_{j} ,} {W}_{i} ≡ {W}_{i} \left(\frac{{L}_{f}}{L}\left({r}_{E , i}\right)\right) .$

By simply replacing *Wᵢ* with ${\left[\frac{{L}_{f}}{L}\left({r}_{E , i}\right)\right]}^{- 1}$ we get back to Eq. (10).

It may be advantageous to pose some conditions that the bandwidth weights *Wᵢ*, should reasonably satisfy:
The first condition on the bandwidth weights *Wᵢ* is that it should ensure an equal secret key generation rate for all users Bobᵢ 14ᵢ with sufficiently good connection: ${W}_{i} \to {\left[\frac{{L}_{f}}{L}\left({r}_{E , i}\right)\right]}^{- 1} for {\left[\frac{{L}_{f}}{L}\left({r}_{E , i}\right)\right]}^{- 1} ≪ {W}_{cutoff} ,$ where *W*_{cutoff} is a characteristic bound, depicting sufficiently high line losses and thus describing a relatively high level of ${\left[\frac{{L}_{f}}{L}\left({r}_{E , i}\right)\right]}^{- 1}$.

On the other hand, we may set an upper limit Wₗᵢₘᵢₜ to the ratio of optical pulses directed to a particular user regardless of his connection speed: $∀ \frac{{L}_{f}}{L} \left({r}_{E , i}\right) ∈ {ℝ}_{\geq 0} ⇒ {W}_{i} \leq {W}_{limit} .$

Finally, we may assume the borderline expected key generation rate to be equal to, for instance ${W}_{cutoff} = \sqrt{N} ⋅ \left〈{\left[\frac{{L}_{f}}{L}\left({r}_{E , i}\right)\right]}^{- 1}\right〉 = \frac{1}{\sqrt{N}} {\sum }_{j} {\left[\frac{{L}_{f}}{L}\left({r}_{E , j}\right)\right]}^{- 1} ,$ where <A> denotes the mean value of A, and *N* is the number of active connections Alice 12 has at the moment.

One of the simplest functions which satisfies all these requirements has the following form, ${W}_{i} = {\left[\frac{{L}_{f}}{L}\left({r}_{E , i}\right)\right]}^{- 1} \left[1-exp\left(-\frac{{W}_{cutoff} \times \left〈{\left[\frac{{L}_{f}}{L}\left({r}_{E , i}\right)\right]}^{- 1}\right〉}{{\left[\frac{{L}_{f}}{L}\left({r}_{E , i}\right)\right]}^{- 1}}\right)\right] ,$ where *W*_{cutoff} is the borderline expected key generation rate.

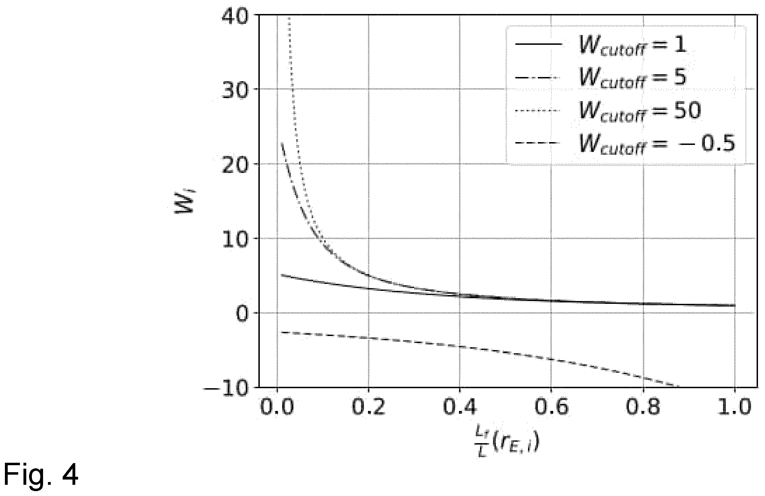

The function ${W}_{i} \left(\frac{{L}_{f}}{L}\left({r}_{{E}_{i}}\right)\right)$ is depicted in Fig. 4 for different *W*_{cutoff} values. Note that even if *Wᵢ* is negative, ${L}_{i}^{∗ , fair}$ remains positive.

### (k) Cut-off Selection

We will now describe one exemplary way of choosing the value of the *W*_{cutoff} parameter according to the preferences chosen by the communication provider. We note that the same approach can be generalized to other QKD protocols that are not necessarily based on the control of the losses in the transmission channel.

There is a clear trade-off between the key rate egalitarianism in the star-like network depicted in Fig. 2 and the total key distribution rate. To quantify this trade-off, we introduce the utility function, $U = {\left(1-G\right)}^{α} {\left(\frac{{\sum }_{i = 1}^{N} {L}_{f , i}}{{L}_{a}}\right)}^{1 - α} ,$ where $G = \frac{{\sum }_{i = i}^{N} {\sum }_{j = 1}^{N} \left|{L}_{f , i}-{L}_{f , j}\right|}{2 {\sum }_{i = i}^{N} {\sum }_{j = 1}^{N} {L}_{f , j}} ∈ \left[0, 1\right] ,$ is a Gini coefficient representing the degree of inequality in terms of the final key generation rate between users, and *α* ∈ [0, 1] is a continuous parameter that represents a preference for equality (*α =* 1) or for a larger total key rate (*α =* 0). The function *u* is normalized. The utility function allows one to choose *W*_{cutoff} in accordance with the preference: one may maximize *u* for a fixed chosen value of *α.*

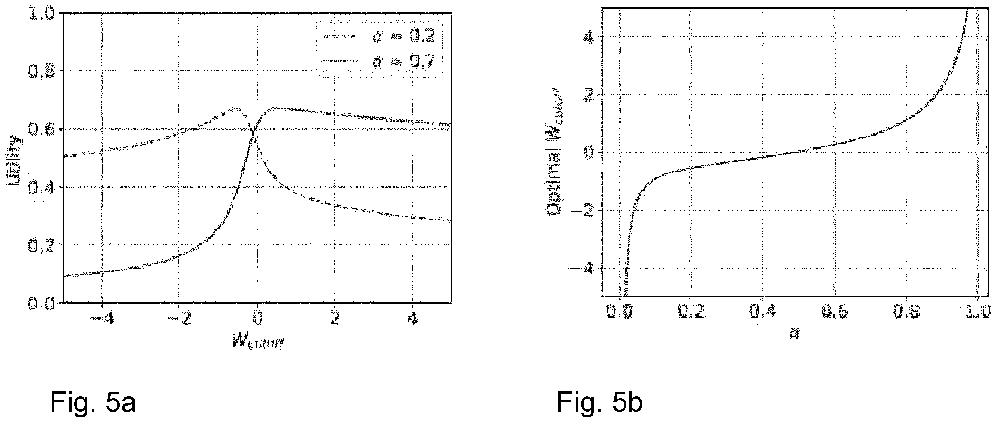

A graphic representation of the utility function *u* in the case of uniformly distributed *L_{f}*/*L* as a function of *W*_{cutoff} for two different *α* is shown in Fig. 5a. Figure 5b shows the correspondence of the optimal *W*_{cutoff} to *α* for the same distribution of *L_{f}*/*L.* The plots are built for a set of 50 users with $\frac{{L}_{f}}{L} \left({r}_{E , i}\right)$ evenly spaced on the interval (0,1]. For the sake of normalization, we set *Lₐ* equal to the number of Bobs, *Lₐ = N* × 1 s⁻¹.

One can infer that *α* = 1 embodies total disregard for the total key rate with care only about the final key rate equality of *N* users: in this case, *u* is maximized at *W*_{cutoff} = ∞. In the opposite limit *α* = 0 one only cares about the total efficiency, the maximum of which is achieved at *W*_{cutoff} = -∞.

The same reasoning can be applied to various other QKD protocols. For protocols like BB84 or B92, the ratio *L_{f}*/*L* varies based on the distance between Alice and Bob. Thus, in a star-like network as depicted in Fig. 2, this ratio might differ among users but would remain (relatively) stable over time. This may contrast with the variability seen in loss control-based QKD. Whenever a new connection is established between Alice and another Bob, the rates of signal pulses sent to each user should be readjusted. This readjustment can be executed using *u* and *W*_{cutoff}.

We now discuss the subject of choosing different cutoff values ${W}_{cutoff}^{\left(i\right)}$ for the expected key generation rate. We will first consider 5 cases. The first case is characterized by using linear weights. Alternatively, it can be described as using an infinitely large cutoff rate. In the four remaining cases, we put the cutoff rate to four different values. $\begin{matrix}{W}_{cutoff}^{\left(0\right)} = ∞ \\ {W}_{cutoff}^{\left(1\right)} = \left〈{\left[\frac{{L}_{f}}{L}\left({r}_{E , i}\right)\right]}^{- 1}\right〉 \\ {W}_{cutoff}^{\left(2\right)} = 2 ⋅ \left〈{\left[\frac{{L}_{f}}{L}\left({r}_{E , i}\right)\right]}^{- 1}\right〉 \\ {W}_{cutoff}^{\left(3\right)} = \sqrt{N} ⋅ \left〈{\left[\frac{{L}_{f}}{L}\left({r}_{E , i}\right)\right]}^{- 1}\right〉 \\ {W}_{cutoff}^{\left(4\right)} = \frac{N}{2} ⋅ \left〈{\left[\frac{{L}_{f}}{L}\left({r}_{E , i}\right)\right]}^{- 1}\right〉\end{matrix}$

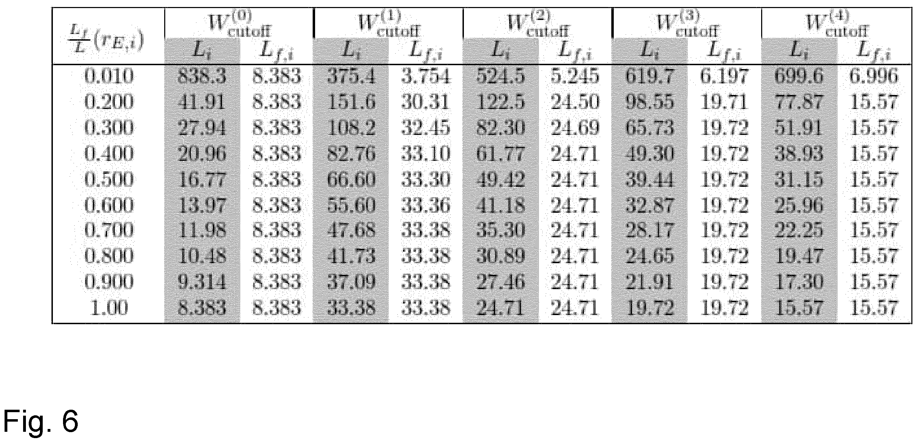

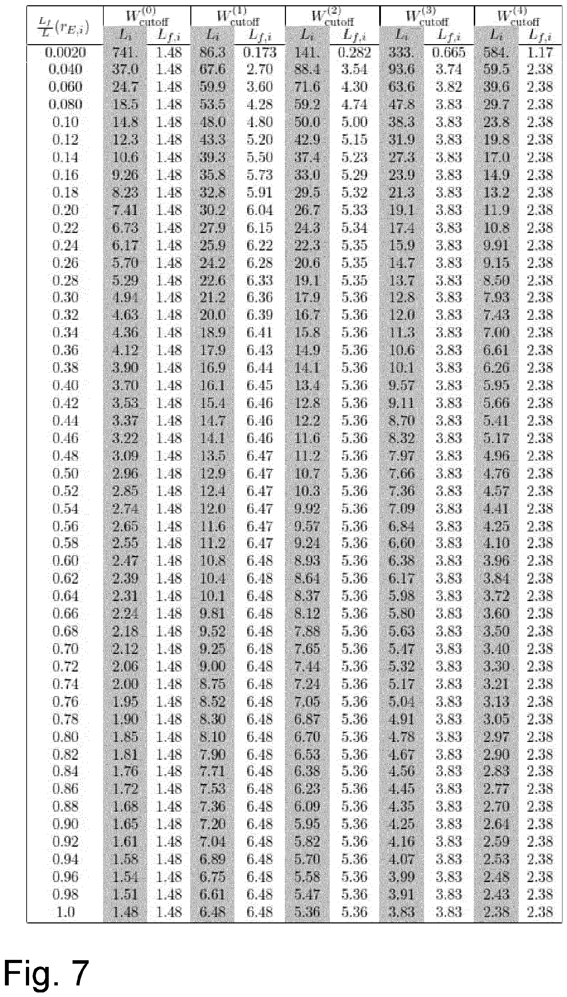

We consider two different scenarios defined by the number of Bobs connected to Alice. Fig. 6 shows a table with 10 Bobs, wheras Fig. 7 corresponds to a scenario with a much larger number of 50 Bobs. In each scenario, we have one Bob whose connection is twenty times worse than the second-worst Bob. Other Bobs' expected key generation rates are spread out evenly in the range from one to zero. The tables show the pulse frequencies *Lᵢ* and key rates *L_{f,i}* each user gets from Alice.

### (1) Adjusted Operation to Eliminate Excessive Key Sharing

Another challenge encountered in some communication scenarios is excessive key sharing. This may happen if, during the transmission cycle, Alice 12 will fully fulfill the request(s) of one or several users Bobᵢ 14ᵢ before the next KAT recalculation. In this case, a portion of the shared secret key may be redundant, and it may be preferable to redistribute the bandwidth surplus to the users who truly need it at the moment.

This may be achieved with the following adjustment to the algorithm. At first, we sort the list of Bobs Bobᵢ 14ᵢ in increasing order of time needed to fulfill their data request with the current data transfer rate *τᵢ = Dᵢ*/*L_{f,i}.* So the first table row is occupied by *Bob*_{*s*₁} with the smallest projected time, while the last row is occupied by *Bob_{s_{N}}* with the largest projected time. Here, permutation s represents the ordering in the KAT. Then, we introduce two new columns to the KAT. In the first additional column, we put the projected bandwidth needed to transfer all requested data to the corresponding user during *T_{KAT}.* ${L}_{i}^{proj} = \frac{{D}_{i}}{{T}_{KAT}} {\left[\frac{{L}_{f}}{L}\left({r}_{E , i}\right)\right]}^{- 1}$

If the first user's projected bandwidth is larger than his "fair share," we only assign each user's "fair share" as the final bandwidth distribution. Otherwise, if the first user's projected bandwidth is smaller than his "fair share" ( ${L}_{i}^{proj} < {L}_{i}^{∗ , fair}$)*,* then we allocate the total projected bandwidth to this user and recalculate other users' "fair share" according to ${L}_{i}^{∗ ∗ , fair} = \left({L}_{a}-{L}_{{s}_{1}}^{proj}\right) \frac{{W}_{i}}{{\sum }_{j \neq {s}_{1}} {W}_{j}} ,$ where the first user in the list of users sorted by the number of bits requested (denoted by *s*₁), is excluded from the summation in the denominator.

If the second user's projected bandwidth is greater than the updated "fair share," we assign the latest "fair share" values as final for each remaining user. If the second user's projected bandwidth happens to be smaller than his newly updated "fair share" ${L}_{i}^{proj} < {L}_{i}^{∗ ∗ , fair}$ then again we allocate the total projected bandwidth to this user and recalculate other users' "fair share" similarly to Eq. (23), ${L}_{i}^{∗ ∗ ∗ , fair} = \left({L}_{a}-{L}_{{s}_{1}}^{proj}-{L}_{{s}_{2}}^{proj}\right) \frac{{W}_{i}}{{\sum }_{j \neq {s}_{1} , {s}_{2}} {W}_{j}} ,$

The procedure outlined above may continue until it reaches the last user. If the last user's "fair share" exceeds his projected bandwidth, we divide the surplus evenly over all users and add it to their pulse frequencies.

An example KAT for three users is illustrated in the following Table. Here we assume *T_{KAT} =* 1s and *Lₐ* = *1000Hz.*

| *User* | *Requested data* | *Expected key generation rate* | *User's "fair" bandwidth share* | *Projected bandwidth needed to transfer all requested data* | *Updated "fair share"* | *Final allocated bandwidth share* |
|---|---|---|---|---|---|---|
| | *Dᵢ*, bits | $\frac{{L}_{f}}{L} \left({r}_{E , i}\right)$ | ${L}_{i}^{∗ , fair}$ , Hz | $\frac{{D}_{i}}{{T}_{KAT}} {\left[\frac{{L}_{f}}{L}\left({r}_{E , i}\right)\right]}^{- 1} ,$ Hz | ${L}_{i}^{∗ ∗ , fair}$ , Hz | ${L}_{i}^{∗ … ∗}$ , Hz |
| Bob2 | 17 | 0.059 | 471 | 290 | 290 | 290 |
| Bob1 | 322 | 0.111 | 251 | 2911 | 336 | 336 |
| Bob3 | 1.03 · 10¹⁶ | 0.100 | 278 | 1.03 · 10¹⁷ | 374 | 374 |

Once more, the final frequencies of pulses that will go to the corresponding recipients will generally account for all service pulses, ${L}_{i} = {L}_{i}^{∗ ∗ … ∗ , fair} + {L}_{i , min}$

### (m) Pre-Shared Key Allocation

As described above, we propose making messages linked to key requests and responses to them accessible to all users . This may enable receivers Bobᵢ 14ᵢ to verify if their raw key rate deviates from the expected one automatically without trusting any of the other users' decisions. In particular, these safeguards may prevent Alice 12 from cheating and doing a favor to one user, thereby discriminating against the other users.

This may be achieved with a pre-shared key known to all the users. For example, all N users may distribute this key between them at a pre-defined point in time. Here are the steps to attain this aim:
(1) The regime of a switch functioning changes once at a pre-defined period (denoted *T*_{KAT}). During this period, all the users Bobᵢ 14ᵢ can send no more than one request for a QKD session. The cryptographic key request messages are sent at a pre-defined moment before the end of a current session. Similarly, the responses to these cryptographic key requests are sent before the end of this session.
(2) Therefore, one can calculate the number of bits necessary to let the user send and read all the cryptographic key request messages during the day. We thus propose refilling a buffer with a pre-shared key common to every user once a day. The number of sessions necessary to distribute the total number of bits may be calculated according to losses in everybody's channel shortly before the moment of distribution. We also propose distributing this key at the moment when statistically, nobody requires any QKD session.
(3) Alice 12 distributes this key in the same manner as usual (i.e., as described in the Section Key Distribution Allocation above), but this time Alice 12 sends the same strings of bits to all the users Bobᵢ 14ᵢ. She thus calculates the order of bit sending in order to finally distribute the same string between all the N Bobs 14ᵢ (based on the key repetition frequencies corresponding to each of the users found according to the Key Allocation Table and the principles of the switch operation, as described above in the Section Retransmitting the signals).

### (n) The Control of the Switch

This Section describes a robust yet not autonomous switch control protocol. We assume that the control of the switch 18 is in the hands of the sender Alice 12. Alice 12 may send all the commands directly to the switch 18, possibly with the help of a trustworthy person physically located near the control panel of the switch 18. For instance, the information may be transmitted between Alice 12 and the trustworthy person via a classical authenticated channel. These messages can be encrypted beforehand with a pre-shared key necessary for channel authentication needs.

First, we will explain which factors limit Alice's liberty of action and thus improve the users' confidence in the security of the key distribution. The subsequent description shows how the pre-shared key may be distributed between these two parties. Finally, in this protocol, we also handle a security issue linked to the fact that the losses in a switch may be significant, whereas the leakage area is small compared to the natural fiber losses.

The protocol is based on the following assumptions:
(1) Alice is the only person having access to the switch 18. Firstly, even if Alice 12 collaborates with one of the users Bobᵢ 14ᵢ who wants some more key to be received by him (i.e., "stolen" from other users), the other users will be able to verify this and subsequently protest against this act. Since all the users had a specific time slot to agree on upcoming session parameters, they will be able to notice deviations from the announced regime of key distribution. Secondly, since all the request messages are accessible to the whole system, the users Bobᵢ 14ᵢ will be able to check the legitimacy of the regime announced by Alice 12 by manually calculating the key allocation table. Thirdly, being in the hands of the sender Alice 12, the switch 18 is accessible for slight adaptations to technical issues. For instance, the delays of sending and a redirection of the light may be well correlated. Thus, only Alice 12 can reasonably adjust the switch's functioning to let the system work properly.
(2) A pre-shared key accessible to Alice 12 and the system controlling a switch 18 (such as a trustworthy person near the switch 18) may be distributed in advance in large quantities. Although this supposition may not allow the system to be completely plug-and-play and not require any system support, it may limit any excess maintenance. From a practical point of view, there are two reasons to believe that this strategy will likely not worsen the protocol's performance. First, the relay has a limited shelf life proportional to the number of operations. Second, the commands sent by Alice 12 to control the switch 18 are concise (all the necessary information can be coded in several bits long messages). These two factors may guarantee that one can install the switch 18 with a pre-shared key long enough to last until the switch 18 can no longer operate. In this scenario, the system will not require any additional support.
(3) The node containing the switch 18 will not be considered trusted, yet some technical solutions could be applied to improve system security. For instance, one may wrap this apparatus part in a special wire to not let an eavesdropper Eve benefit from local losses on the switch 18. The design of this coating allows the users to detect any intervention in this system.

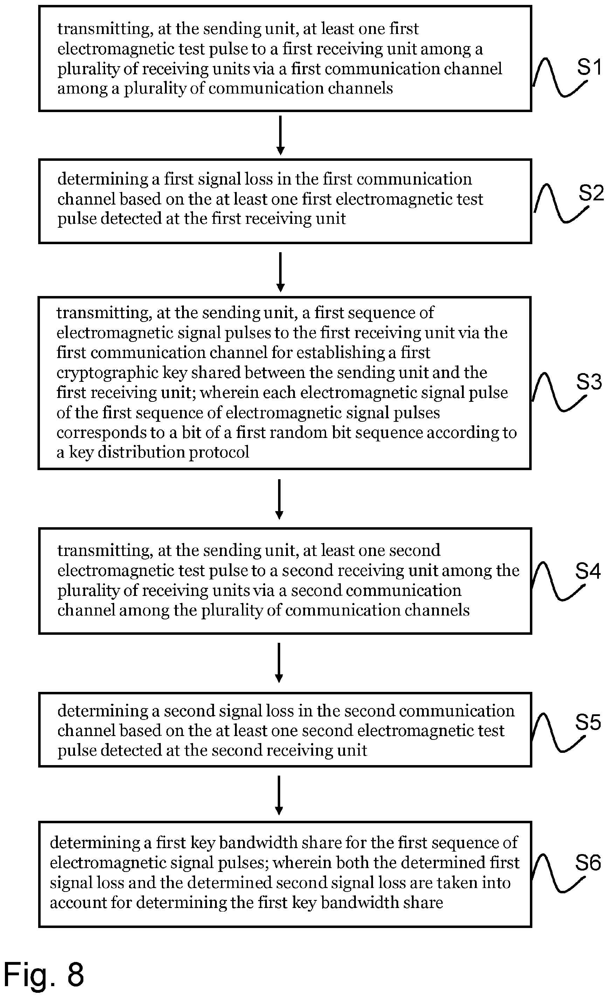

Fig. 8 is a flow diagram illustrating a method for establishing a plurality of secret cryptographic keys between a sending unit and a plurality of receiving units, wherein the sending unit is connected to the plurality of receiving units by a plurality of communication channels.

In a first step S1, at least one first electromagnetic test pulse is transmitted, at the sending unit, to a first receiving unit among the plurality of receiving units via a first communication channel among the plurality of communication channels.

In a second step S2, a first signal loss is determined in the first communication channel based on the at least one first electromagnetic test pulse detected at the first receiving unit.

In a third step S3, a first sequence of electromagnetic signal pulses is transmitted, at the sending unit, to the first receiving unit via the first communication channel for establishing a first cryptographic key shared between the sending unit and the first receiving unit, wherein each electromagnetic signal pulse of the first sequence of electromagnetic signal pulses corresponds to a bit of a first random bit sequence according to a key distribution protocol.

In a fourth step S4, at least one second electromagnetic test pulse is transmitted, at the sending unit, to a second receiving unit among the plurality of receiving units via a second communication channel among the plurality of communication channels.

In a fifth step S4, a second signal loss is determined in the second communication channel based on the at least one second electromagnetic test pulse detected at the second receiving unit.

In a sixth step S6, a first key bandwidth share is determined for the first sequence of electromagnetic signal pulses, wherein both the determined first signal loss and the determined second signal loss are taken into account for determining the first key bandwidth share.

While the flow diagram of Fig. 8 necessarily shows the steps S1 to S6 in a certain time order, it will be understood by those skilled in the art that the present disclosure is not limited to a specific time order, and that the order of the method steps may be changed. For instance, the steps of transmitting the first electromagnetic test pulse to the first receiving unit and transmitting the second electromagnetic test pulse to the second receiving unit may both take place before the first signal loss and the second signal loss are determined.

In some embodiments, the step of transmitting the at least one first electromagnetic test pulse to the first receiving unit via the first communication channel may precede the step of determining the first signal loss in the first communication channel based on the at least one first electromagnetic test pulse, which may precede the step of transmitting the at least one second electromagnetic test pulse to the second receiving unit via the second communication channel, which may precede the step of determining the second signal loss in the second communication channel based on the at least one second electromagnetic test pulse, which may precede the step of transmitting the first sequence of electromagnetic signal pulses to the first receiving unit via the first communication channel for establishing the first cryptographic key, which may precede the step of determining the first key bandwidth share for the first sequence of electromagnetic signal pulses, wherein both the determined first signal loss and the determined second signal loss are taken into account for determining the first key bandwidth share.

The examples described above and the Figures merely serve to illustrate the techniques of the present disclosure, but should not be understood to imply any limitation. The scope of the disclosure is defined by the appended claims.

### Reference Signs

- 10, 10': communication system
- 12: sending unit
- 14₁, 14₂, ..., 14_{N}: receiving units
- 16₁, 16₂, ..., 16_{N}: communication channels
- 18: optical switch

## Claims

1. A method for establishing a plurality of secret cryptographic keys shared between a sending unit (12) and a plurality of receiving units (14₁, 14₂, ..., 14_{N}), wherein the sending unit (12) is connected to the plurality of receiving units (14₁, 14₂, ..., 14_{N}) by a plurality of communication channels (16₁, 16₂, ..., 16_{N}), the method comprising:
transmitting, at the sending unit (12), at least one first electromagnetic test pulse to a first receiving unit (14₁, 14₂, ..., 14_{N}) among the plurality of receiving units (14₁, 14₂, ..., 14_{N}) via a first communication channel (16₁, 16₂, ..., 16_{N}) among the plurality of communication channels (16₁, 16₂, ..., 16_{N});
determining a first signal loss in the first communication channel (16₁, 16₂, ..., 16_{N}) based on the at least one first electromagnetic test pulse detected at the first receiving unit (14₁, 14₂, ..., 14_{N});
transmitting, at the sending unit (12), a first sequence of electromagnetic signal pulses to the first receiving unit (14₁, 14₂, ..., 14_{N}) via the first communication channel (16₁, 16₂, ..., 16_{N}) for establishing a first cryptographic key shared between the sending unit (12) and the first receiving unit (14₁, 14₂, ..., 14_{N}); wherein each electromagnetic signal pulse of the first sequence of electromagnetic signal pulses corresponds to a bit of a first random bit sequence according to a key distribution protocol;
transmitting, at the sending unit (12), at least one second electromagnetic test pulse to a second receiving unit (14₁, 14₂, ..., 14_{N}) among the plurality of receiving units (14₁, 14₂, ..., 14_{N}) via a second communication channel (16₁, 16₂, ..., 16_{N}) among the plurality of communication channels (16₁, 16₂, ..., 16_{N});
determining a second signal loss in the second communication channel (16₁, 16₂, ..., 16_{N}) based on the at least one second electromagnetic test pulse detected at the second receiving unit (14₁, 14₂, ..., 14_{N});
determining a first key bandwidth share for the first sequence of electromagnetic signal pulses;
wherein both the determined first signal loss and the determined second signal loss are taken into account for determining the first key bandwidth share.

2. The method according to claim 1, wherein both the determined first signal loss and the determined second signal loss are taken into account for determining the first key bandwidth share even when, in a given communication round among a plurality of communication rounds according to the key distribution protocol, no second cryptographic key shared between the sending unit (12) and the second receiving unit (14₁, 14₂, ..., 14_{N}) is established; or even when, in a given communication round among a plurality of communication rounds according to the key distribution protocol, a second cryptographic key is shared between the sending unit (12) and the second receiving unit (14₁, 14₂, ..., 14_{N}) only for authenticating the second communication channel (16₁, 16₂, ..., 16_{N}).

3. The method according to any one of the preceding claims, further comprising:
transmitting, at the sending unit (12), a second sequence of electromagnetic signal pulses to the second receiving unit (14₁, 14₂, ..., 14_{N}) via the second communication channel (16₁, 16₂, ..., 16_{N}) for establishing a second shared cryptographic key between the sending unit (12) and the second receiving unit (14₁, 14₂, ..., 14_{N}); wherein each electromagnetic signal pulse of the second sequence of electromagnetic signal pulses corresponds to a bit of a second random bit sequence according to the key distribution protocol;
determining a second key bandwidth share for the second sequence of electromagnetic signal pulses;
wherein both the determined first signal loss and the determined second signal loss are taken into account for determining both the first key bandwidth share and the second key bandwidth share.

4. The method according to claim 3, wherein determining the first key bandwidth share and determining the second key bandwidth share comprises assigning a first bandwidth weight pertaining to the first sequence of electromagnetic signal pulses and assigning a second bandwidth weight pertaining to the second sequence of electromagnetic signal pulses, respectively, wherein, optionally, the first bandwidth weight is selected as a function of a first key generation rate for the first sequence of electromagnetic signal pulses and/or the second bandwidth weight is selected as a function of a second key generation rate for the second sequence of electromagnetic signal pulses.

5. The method according to claim 4, wherein the first bandwidth weight and the second bandwidth weight are assigned to be no larger than a first maximum weight and no larger than a second maximum weight, respectively, wherein, optionally, the second maximum weight is equal to the first maximum weight and/or wherein, optionally, the first maximum weight is selected as a function of a first key generation rate for the first sequence of electromagnetic signal pulses and/or the second maximum weight is selected as a function of a second key generation rate for the second sequence of electromagnetic signal pulses.

6. The method according to claim 4 or 5, wherein the first key bandwidth share and the second key bandwidth share are determined by means of an optimization, wherein an optimization functional of the optimization depends on a user-selected distribution parameter that reflects a degree of uniformity in the amount of secret cryptographic keys shared with the first receiving unit (14₁, 14₂, ..., 14_{N}) and the second receiving unit (14₁, 14₂, ..., 14_{N}), respectively.

7. The method according to any one of the claims 3 to 6, wherein the second shared cryptographic key coincides with the first shared cryptographic key.

8. The method according to any one of the preceding claims, wherein both the first receiving unit (14₁, 14₂, ..., 14_{N}) and the second receiving unit (14₁, 14₂, ..., 14_{N}) are connected to the sending unit (12) by means of an optical switch unit (18).

9. The method according to any one of the preceding claims, further comprising authenticating the first communication channel (16₁, 16₂, ..., 16_{N}), in particular by means of error correction and/or information reconciliation and/or privacy amplification.

10. The method according to any one of the preceding claims, further comprising receiving, at the sending unit (12), a first cryptographic key request from the first receiving unit (14₁, 14₂, ..., 14_{N}) and/or receiving, at the sending unit (12), a second cryptographic key request from the second receiving unit (14₁, 14₂, ..., 14_{N}).

11. The method according to claim 10, wherein the first cryptographic key request and/or the second cryptographic key request are encoded by means of a cryptographic key common to the sending unit (12) and the plurality of receiving units (14₁, 14₂, ..., 14_{N}).

12. The method according to any one of the preceding claims, further comprising iterating the method steps in a plurality of communication rounds according to the key distribution protocol.

13. The method according to claim 12, wherein, in every communication round among the plurality of communication rounds, both the determined first signal loss and the determined second signal loss are taken into account for determining the first key bandwidth share even when, in a given communication round among the plurality of communication rounds, no second cryptographic key shared between the sending unit (12) and the second receiving unit (14₁, 14₂, ..., 14_{N}) is established; or even when, in a given communication round among the plurality of communication rounds, a second cryptographic key is shared between the sending unit (12) and the second receiving unit (14₁, 14₂, ..., 14_{N}) only for authenticating the second communication channel (16₁, 16₂, ..., 16_{N}).

14. A computer program comprising computer-readable instructions which, when executed by a computer, cause the computer to carry out a method according to any one of the preceding claims.

15. A communication system (10, 10') comprising means adapted to implement a method according to any one of the claims 1 to 13.
